# EUROPÄISCHE PATENTSCHRIFT

(11) **EP 2 461 724 B1**
(45) Veröffentlichungstag und Bekanntmachung des Hinweises auf die Patenterteilung: **20.05.2015**
(21) Anmeldenummer: 10737538.8
(22) Anmeldetag: 21.07.2010
(51) Int. Cl.: A47J 31/44, H05B 6/06

(54) **KAFFEEMASCHINE MIT EINER EINRICHTUNG ZUR BEVORRATUNG VON MILCH**
COFFEE MACHINE WITH A DEVICE FOR STORING
MACHINE A CAFE AVEC UN APPAREIL POUR L'ALIMENTATION EN LAIT

(30) Priorität: 04.08.2009 DE 102009036089
(43) Veröffentlichungstag der Anmeldung: 13.06.2012
(73) Patentinhaber: WMF WÜRTTEMBERGISCHE METALLWARENFABRIK AG, 73309 Geislingen/Steige (DE)
(72) Erfinder: GÖLTENBOTH, Frank, 89134 Blaustein (DE)
(74) Vertreter: BRP Renaud & Partner mbB Rechtsanwälte Patentanwälte Steuerberater
(86) Internationale Anmeldenummer: PCT/EP2010/060547
(87) Internationale Veröffentlichungsnummer: WO 2011/015452

(56) Entgegenhaltungen:
- EP-A1- 1 647 951
- EP-A1- 2 042 063
- DE-A1-102007 036 334
- JP-A- 3 282 126
- JP-A- 2007 111 058

## Beschreibung

Die vorliegende Erfindung betrifft eine Kaffeemaschine gemäß Anspruch 1.

Die DE 102007036334 beschreibt eine bekannte Kaffeemaschine.

Kaffeemaschinen besitzen heutzutage üblicherweise eine Vorrichtung zum Erhitzen und Aufschäumen von Milch, mit Hilfe welcher Kaffeemischgetränke, wie beispielsweise Cappuccino, hergestellt werden können. Eine Bevorratung der hierfür erforderlichen Milch kann dabei entweder ungekühlt, zum Beispiel in einer Verkaufspackung (Tetra Pak) oder einem beliebigen Behälter oder aber auch gekühlt in einem kleinen Beistellkühlschrank erfolgen. Derartig Beistellkühlschränke ermitteln die Temperatur außerhalb eines Kühlraumes indirekt beispielsweise mittels eines thermomechanischen Kapillarrohrreglers als Thermostat oder mit einem elektronischen Thermostaten mit NTC-Fühler, der nicht nur die Kühlung regelt, sondern in manchen Fällen sogar die gemessene Temperatur darüber hinaus an eine Digitalanzeige weiterleitet.

Problematisch bei derartigen Beistellkühlschränken ist jedoch, dass die Regelung der Temperatur indirekt über beispielsweise den Kapillarrohrregler erfolgt, so dass die Lufttemperatur innerhalb des Kühlraums eine sehr große Hysterese erfährt. Selbst bei elektronisch wirkenden Thermostaten ist es dabei unmöglich durch die sehr indirekte Messmethode aus der ermittelten Temperatur Rückschlüsse auf die Milchtemperatur in einem Milchvorratsbehälter zu ziehen. Wird dagegen die Methode mit NTC-Fühlern direkt im Behälter angewandt, gibt es folgende Nachteile: Einerseits muss der in den Vorratsbehälter ragende Temperaturfühler gegen die Behälterwandung gut und dauerhaft abgedichtet werden, da er mit dem Behälter gereinigt werden können muss. Die elektrische Kontaktierung des NTC-Fühlers muss darüber hinaus lösbar sein, um den Milchbehälter beispielsweise reinigen zu können, wobei derartige Kontaktierungen korrodieren und/oder verschmutzen können und dadurch Fehler verursachen können. Ein elektrisch am Kühler fest kontaktierter Fühler, welcher flexibel aufgehängt ist damit er in die Milch eingetaucht werden kann, ist ebenfalls denkbar aber kaum hygienisch sauber zu halten. Ein weitere Problem bei bisher bekannten Lösungen ist, dass eine Ausgabetemperatur des Milchschaums bzw. der Milch an einer zugehörigen Kaffeemaschine abhängig von deren Bevorratungstemperatur ist, die in der Regel unbekannt ist oder idealisiert als gekühlt angenommen wird. Schwankungen der Bevorratungstemperatur der Milch führen dabei jedoch nicht nur Schwankungen der Ausgabetemperatur, sondern bei beispielsweise Venturi-Systemen auch zu Mengenschwankungen und damit immer auch zu Schwankungen der Milchschaumqualität.

Die vorliegende Erfindung beschäftigt sich daher mit dem Problem, eine Temperatur einer bevorrateten Milch möglichst genau und fehlerfrei zu erfassen und dadurch eine Milchschaumqualität an einer Kaffeemaschine zu verbessern.

Dieses Problem wird erfindungsgemäß durch den Gegenstand des unabhängigen Anspruches gelöst. Vorteilhafte Ausführungsformen sind Gegenstand der abhängigen Ansprüche.

Die vorliegende Erfindung beruht auf dem allgemeinen Gedanken, bei einer Kaffeemaschine, eine Temperaturerfassungseinrichtung mit zumindest einem Infrarotsensor vorzusehen, mittels welchem die Mischtemperatur exakt erfasst werden kann. Die exakte Erfassung der Milchtemperatur kann darüber hinaus zur Grundlage der Steuerung/Regelung der Milchschaumherstellung in einer benachbarten Kaffeemaschine genutzt werden, so dass die exakte Erfassung der Temperatur der bevorrateten Milch einen positiven Einfluss auf die Qualität des herzustellenden Milchschaums hat. Mittels des erfindungsgemäßen Infrarotsensors lässt sich die Temperatur der bevorrateten Milch nicht nur genau, sondern darüber hinaus auch berührungsfrei ermitteln, so dass der zumindest eine Infrarotsensor an einer Stelle des die Milch aufnehmenden Behälters in der Einrichtung angeordnet werden kann, welche üblicherweise nicht in direktem Kontakt mit der Milch steht und dadurch deutlich geringeren Verschmutzungen ausgesetzt ist. Generell benutzt somit die Erfindung das Prinzip der Infrarotthermographie, um die Temperatur der Milch zu bestimmen und dadurch einen positiven Einfluss auf einen anschließenden Verarbeitungsvorgang, beispielsweise in einem Milchaufschäumer einer Kaffeemaschine, nehmen zu können.

Bei einer vorteilhaften Weiterbildung der erfindungsgemäßen Lösung, weist die Einrichtung eine Kühlvorrichtung zur Kühlung der Milch auf, welche von einer Regeleinrichtung geregelt ist, die Signale von der Temperaturerfassungseinrichtung empfängt. Mittels der Temperaturerfassungseinrichtung und der Kühlvorrichtung ist somit das Einstellen einer vorzugsweise konstanten Milchtemperatur möglich, was ebenfalls zu einer hohen Qualität eines später aus dieser Milch herzustellenden Milchschaumes führt. Mittels der Regeleinrichtung, welche ihre Eingangssignale von der Temperaturerfassungseinrichtung empfängt und welche in Abhängigkeit dieser empfangenen Signale die Kühlvorrichtung steuert bzw. regelt, kann ein einfacher Regelkreis geschaffen werden, der zum einen kostengünstig realisierbar ist und zum anderen eine konstante Milchtemperatur und damit eine hohe Qualität des auszugebenden Milchschaums bewirkt.

Zweckmäßig ist eine Anzeigeeinrichtung vorgesehen, welche die von der Temperaturerfassungseinrichtung erfasste Milchtemperatur anzeigt, das heißt visualisiert. Eine derartige Anzeigeeinrichtung kann die Milchtemperatur beispielsweise digital oder auch mittels eines entsprechenden Zeigers anzeigen und informiert dadurch den Benutzer der Einrichtung stets über die derzeit herrschende Milchtemperatur. Eine derartige Anzeigeeinrichtung zur Visualisierung der Milchtemperatur stellt dabei ein Zusatzmerkmal dar, welches von den Kunden oftmals als besonderer Komfort empfunden wird.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

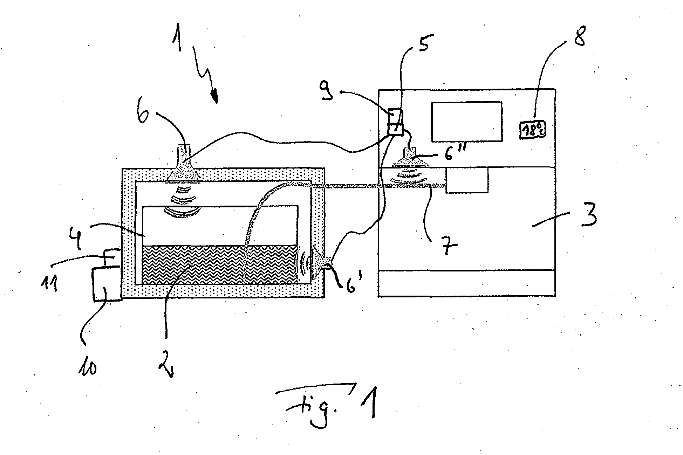

Die einzige Fig. 1 zeigt eine erfindungsgemäße Einrichtung in Verbindung mit einer Kaffeemaschine.

Entsprechend der Fig. 1, weist eine Kaffeemaschine 3 einen die Milch 2 aufnehmenden Behälter 4 auf. Erfindungsgemäß ist darüber hinaus eine Temperaturerfassungseinrichtung 5 mit zumindest einem Infrarotsensor 6 vorgesehen. Gemäß der Fig. 1 ist dabei die Temperaturerfassungseinrichtung 5 im Bereich der Kaffeemaschine 3 angeordnet, wobei diese selbstverständlich auch im Bereich der Einrichtung 1, das heißt insbesondere im Bereich des Behälters 4 angeordnet sein kann. Insgesamt sind gemäß der Fig. 1 drei Infrarotsensoren 6, 6', 6" dargestellt, mittels welchen die Temperatur der Milch 2 nicht nur äußerst exakt, sondern zudem auch berührungslos erfasst werden kann, wobei die Infrarotsensoren 6, 6', 6" insbesondere in Bereichen der Einrichtung 1 angeordnet werden können, die keinen Kontakt mit der Milch 2 aufweisen und dadurch weniger verschmutzungsgefährdet sind.

Zusätzlich kann die Einrichtung 1 eine Kühlvorrichtung 10 zur Kühlung der Milch aufweisen, welche von einer Regeleinrichtung 11 geregelt ist, die Eingangssignale von der Temperaturerfassungseinrichtung 5 empfängt. Auf diese Weise könnte ein geschlossener Regelkreis zur Temperierung der Milch 2 geschaffen und diese somit auf einem konstanten Temperaturniveau gehalten werden. Betrachtet man die Fig. 1 weiter, so kann man erkennen, dass der Infrarotsensor 6' auf eine Oberfläche des Behälters 4 gerichtet ist, wobei selbstverständlich auch denkbar ist, dass ein derartiger Infrarotsensor 6 direkt auf die Oberfläche der Milch 2 oder aber auf eine Verbindungsleitung 7 zur Kaffeemaschine 3 gerichtet ist.

Der Behälter 4 kann - falls ein derartiger Infrarotsensor 6 direkt auf die Oberfläche der Milch 2 oder auf eine Verbindungsleitung 7 ausgerichtet ist - isoliert ausgeführt sein, so dass die gewünschte Milchtemperatur möglichst lange gehalten werden kann. Darüber hinaus kann eine Anzeigeeinrichtung 8 vorgesehen sein, welche die von der Temperaturerfassungseinrichtung 5 erfasste Milchtemperatur anzeigt und insbesondere visuell auswirft. Eine derartige Anzeigeeinrichtung kann beispielsweise ein digitales Display aufweisen und Bestandteil der Kaffeemaschine 3 bzw. der Einrichtung 1 sein. Darüber hinaus ist vorstellbar, dass mittels des zumindest einen Infrarotsensors 6, 6' ein Füllstand der Milch 2 in dem Behälter 4 erfasst werden kann.

Erfindungsgemäß ist die Temperaturerfassungseinrichtung 5 kommunizierend mit einer Steuereinrichtung 9 der Kaffeemaschine 3 verbunden und übermittelt Signale an diese Steuereinrichtung 9, anhand derer diese einen Getränkeausgabeprozess steuert. So kann die Steuereinrichtung 9 bei einer Abweichung einer Ist-Temperatur von einer Soll-Temperatur einen Ausgabeprozess beispielsweise stoppen oder andere Parameter, wie beispielsweise eine Dampftemperatur, zwecks Kompensation von Vorratstemperaturschwankungen entsprechend regeln.

Mit der erfindungsgemäßen Kaffeemaschine 3 kann somit eine exakt bestimmbare und insbesondere konstante Milchtemperatur erreicht werden, zur Erzeugung eines Milchschaums von hoher und insbesondere von gleichbleibend hoher Qualität besonders vorteilhaft ist. Durch die berührungslose Temperaturmessung kann darüber hinaus ein Verschmutzen der Infrarotsensoren 6, 6', 6" vermieden werden, wodurch diese langlebiger und störunanfälliger sein dürften. Generell ist die erfindungsgemäße Temperaturerfassungseinrichtung 5 Bestandteil der Kaffeemaschine 3, wobei die Einrichtung 1 wiederum Bestandteil der Kaffeemaschine 3 ist.

## Patentansprüche

1. Kaffeemaschine (3) mit einer Einrichtung (1) zur Bevorratung von Milch (2), mit einem die Milch (2) aufnehmenden Behälter (4), wobei eine Temperaturerfassungseinrichtung (5) mit zumindest einem Infrarotsensor (6, 6', 6") zur Erfassung der Milchtemperatur vorgesehen ist,
**dadurch gekennzeichnet,**
**dass** die Temperaturerfassungseinrichtung (5) kommunizierend mit einer Steuereinrichtung (9) der Kaffeemaschine (3) verbunden ist und Signale an die Steuereinrichtung (9) übermittelt, anhand derer diese einen Getränkeausgabeprozess steuert.

2. Kaffeemaschine nach Anspruch 1,
**dadurch gekennzeichnet,**
**dass** die Einrichtung (1) eine Kühlvorrichtung (10) zur Kühlung der Milch (2) aufweist, welche von einer Regeleinrichtung (11) geregelt ist, die Signale von der Temperaturerfassungseinrichtung (5) empfängt.

3. Kaffeemaschine nach Anspruch 1 oder 2,
**dadurch gekennzeichnet,**
**dass** der zumindest eine Infrarotsensor (6') auf eine Oberfläche des Behälters (4) gerichtet ist.

4. Kaffeemaschine nach Anspruch 1 oder 2,
**dadurch gekennzeichnet,**
**dass** der zumindest eine Infrarotsensor (6) direkt auf die Milchoberfläche gerichtet ist.

5. Kaffeemaschine nach Anspruch 1 oder 2,
**dadurch gekennzeichnet,**
**dass** der zumindest eine Infrarotsensor (6") auf eine Verbindungsleitung (7) zu einer Kaffeemaschine (3) gerichtet ist.

6. Kaffeemaschine nach einem der vorhergehenden Ansprüche,
**dadurch gekennzeichnet,**
**dass** der Behälter (4) isoliert ist.

7. Kaffeemaschine nach einem der vorhergehenden Ansprüche,
**dadurch gekennzeichnet,**
**dass** eine Anzeigeeinrichtung (8) vorgesehen ist, welche die von der Temperaturerfassungseinrichtung (5) erfasste Milchtemperatur anzeigt.

8. Kaffeemaschine nach einem der vorhergehenden Ansprüche,
**dadurch gekennzeichnet,**
**dass** mittels des zumindest einen Infrarotsensors (6, 6') ein Füllstand in dem Behälter (4) erfassbar ist.

## Claims

1. A coffee machine (3) comprising a device (1) for storing milk (2), comprising a container (4), which accommodates the milk (2), wherein provision is made for a temperature detecting device (5) comprising at least one infrared sensor (6, 6', 6") for detecting the milk temperature,
**characterized in**
**that** the temperature detecting device (5) is connected to a control device (9) of the coffee machine (3) so as to communicate therewith and transmits signals to the control device (9), by means of which signals said control device controls a beverage dispensing process.

2. The coffee machine according to claim 1,
**characterized in**
**that**, for cooling the milk (2), the device (1) encompasses a cooling device (10), which is regulated by a regulating device (11), which receives signals from the temperature detecting device (5).

3. The coffee machine according to claim 1 or 2,
**characterized in**
**that** the at least one infrared sensor (6') is directed towards surface of the container (4).

4. The coffee machine according to claim 1 or 2,
**characterized in**
**that** the at least one infrared sensor (6) is directed directly towards the milk surface.

5. The coffee machine according to claim 1 or 2,
**characterized in**
**that** the at least one infrared sensor (6") is directed towards a connecting line (7) to a coffee machine (3).

6. The coffee machine according to one of the preceding claims,
**characterized in**
**that** the container (4) is insulated.

7. The coffee machine according to one of the preceding claims,
**characterized in**
**that** provision is made for a display device (8), which displays the milk temperature detected by the temperature detecting device (5).

8. The coffee machine according to one of the preceding claims,
**characterized in**
**that** a fill level can be detected in the container (4) by means of the at least one infrared sensor (6, 6').

## Revendications

1. Machine à café (3) avec un système (1) de réserve de lait (2) avec un réservoir (4) réceptionnant le lait (2), un système détecteur de température (5) avec au moins un capteur infrarouge (6, 6', 6") étant prévu pour détecter la température du lait,
**caractérisée en ce que**
le système détecteur de température (5) est relié en communication avec un système de commande (9) de la machine à café (3) et transmet au système de commande (9) des signaux à l'aide desquels ce dernier contrôle un processus de distribution de boisson.

2. Machine à café selon la revendication 1,
**caractérisée en ce que**
le système (1) comporte un dispositif de refroidissement (10) pour refroidir le lait (2), qui est réglé par un système de réglage (11) qui réceptionne des signaux à partir du système détecteur de température (5).

3. Machine à café selon la revendication 1 ou la revendication 2,
**caractérisée en ce que**
l'au moins un capteur infrarouge (6') est dirigé sur une surface du réservoir (4).

4. Machine à café selon la revendication 1 ou la revendication 2,
**caractérisée en ce que**
l'au moins un capteur infrarouge (6) est directement dirigé sur une surface du lait.

5. Machine à café selon la revendication 1 ou la revendication 2,
**caractérisée en ce que**
l'au moins un capteur infrarouge (6'') est dirigé sur un conduit de liaison (7) vers une machine à café (3).

6. Machine à café selon l'une quelconque des revendications précédentes,
**caractérisée en ce que**
le réservoir (4) est isolé.

7. Machine à café selon l'une quelconque des revendications précédentes,
**caractérisée en ce**
**qu'**il est prévu un système d'affichage (8) qui affiche la température du lait détectée par le système détecteur de température (5).

8. Machine à café selon l'une quelconque des revendications précédentes,
**caractérisée en ce**
**qu'**un niveau de remplissage dans le réservoir (4) est détectable au moyen de l'au moins un capteur infrarouge (6, 6').
